# EUROPÄISCHE PATENTSCHRIFT

(11) **EP 2 499 189 B1**
(45) Veröffentlichungstag und Bekanntmachung des Hinweises auf die Patenterteilung: **07.01.2015**
(21) Anmeldenummer: 10778934.9
(22) Anmeldetag: 02.11.2010
(51) Int. Cl.: C08J 5/18, B32B 27/36

(54) **VERFAHREN ZUR HERSTELLUNG VON SCHRUMPFFOLIEN**
METHOD FOR PRODUCING SHRINK FILMS
PROCÉDÉ DE FABRICATION DE FILMS RÉTRACTABLES

(30) Priorität: 09.11.2009 EP 09175416
(43) Veröffentlichungstag der Anmeldung: 19.09.2012
(73) Patentinhaber: BASF SE, 67056 Ludwigshafen (DE)
(72) Erfinder: AUFFERMANN, Jörg, 67251 Freinsheim (DE); SKUPIN, Gabriel, 67346 Speyer (DE); KÜNKEL, Andreas, 67434 Neustadt (DE)
(86) Internationale Anmeldenummer: PCT/EP2010/066580
(87) Internationale Veröffentlichungsnummer: WO 2011/054786

(56) Entgegenhaltungen:
- WO-A1-02/059198
- WO-A1-2010/034689
- WO-A2-03/061957
- DE-A1-102005 053 068

## Beschreibung

Die vorliegende Erfindung betrifft ein Verfahren zur Herstellung von mehrlagigen Schrumpffolien enthaltend:
A) 45 bis 70 Gew.- % eines biologisch abbaubaren, aliphatisch-aromatischen Polyester erhältlich durch Kondensation von:
   i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
   ii) 60 bis 30 mol %, bezogen auf die Komponenten i bis ii, eines Terephthalsäurederivats;
   iii) 98 bis 102 mol %, bezogen auf die Komponenten i bis ii, eines C₂-C₈-Alkylendiols oder C₂-C₆-Oxyalkylendiols;
   iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
   v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
   vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs; und
B) 30 bis 55 Gew.-% Polymilchsäure;
   und
C) 0 bis 2 Gew.-% eines Verträglichkeitsvermittlers,
   wobei ein Aufblasverhältnis kleiner oder gleich 4:1 gewählt wird, und
   wobei sich mindestens die mittlere Lage wie folgt zusammensetzt:
   A) 20 bis 70 Gew.- % eines biologisch abbaubaren, aliphatisch-aromatischen Polyester erhältlich durch Kondensation von:
      i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
      ii) 60 bis 30 mol %, bezogen auf die Komponenten i bis ii, eines Terephthalsäurederivats;
      iii) 98 bis 102 mol %, bezogen auf die Komponenten i bis ii, eines C₂-C₈-Alkylendiols oder C₂-C₆-Oxyalkylendiols;
      iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
      v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern und
   vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
      und
   B) 30 bis 80 Gew.-% Polymilchsäure: und
   C) 0 bis 2 Gew.-% eines Verträglichkeitsvermittlers.

Schrumpffolien werden heute für die unterschiedlichsten Verpackungsanwendungen eingesetzt. Man unterscheidet die sogenannten Schwerschrumpffolien, welche überwiegend zur Sicherung von auf Paletten gestapelten Gütern z.B. in der Kunststoffindustrie (Sackwaren) oder in der Bauindustrie (Ziegel, Steine, Baustoffe etc.) eingesetzt werden und den Feinschrumpffolien, welche z.B. für Sammelverpackungen (z.B. Six-Packs von 0,5l, 1l oder 1,5 l PET Flaschen) in der Getränkeindustrie eingesetzt werden. Die im Stand der Technik verwendeten Schrumpffolien enthalten meist Polyolefine wie LDPE. Der Nachteil der Schrumpffolien auf Basis von PE ist, dass sie um die nötigen Haltekräfte an den verpackten Gütern aufzuweisen, relativ dick sein müssen. Feinschrumpffolien aus PE besitzen üblicherweise eine Foliendicke von ca. 30 bis 90 µm, während Schwerschrumpffolien aus PE im Allgemeinen Foliendicken von 130 bis 200 µm aufweisen. Somit ergibt sich ein hoher Materialaufwand für die Verpackung solcher Güter. Weiterhin steigen durch das höhere Gewicht die Transportkosten für die verpackten Waren. Schließlich lassen sich Schrumpffolien aus PE erst bei Temperaturen von ca. 180 °C und höher in sogenannten Schrumpfautomaten verarbeiten. Die hohen Verarbeitungstemperaturen führen zu hohen Energiekosten und können auch negative Folgen für die zu verpackenden Güter haben.

Ziel der vorliegenden Erfindung war es deshalb, dünne Schrumpffolien bereitzustellen, die im Vergleich zu den dickeren PE Folien gute Schrumpfeigenschaften bei gleichzeitig hohen Haltekräften an den verpackten Gütern zeigen. Weiterhin sollte die Verarbeitungstemperatur in den sogenannten Schrumpfautomaten gesenkt werden.

Überraschenderweise liefert das eingangs erwähnte Verfahren dünne Schrumpffolien mit hervorragenden Schrumpfeigenschaften.
Neben der mechanischen Festigkeit sind die Schrumpfeigenschaften in Längs- und Querrichtung von Schrumpffolien eine wichtige Eigenschaft für die spätere Ausprägung der Haltekräfte an den verpackten Gütern. Vorzugsweise liegen die Schrumpfwerte für Feinschrumpffolien in Längsrichtung bei größer 60 %, insbesondere 70 bis 80% und in Querrichtung bei kleiner 40 %, insbesondere 20 bis 30%. Diese Schrumpfeigenschaften werden im erheblichen Maß durch die während der Folienextrusion eingebrachte und eingefrorene Orientierung bestimmt. Bei Feinschrumpffolien auf Polyolefin-Basis wie z.B. LDPE beobachtet man, dass eine Folie die vorzugsweise in Längsrichtung orientiert wurde auch in dieser Richtung eine stärkere Ausprägung der Schrumpfeigenschaften aufweist. Umgekehrt weisen stark in Querrichtung orientierte Folien, auch in dieser Richtung höhere Schrumpfwerte auf. Der wohl wichtigste Parameter zu Beeinflussung der Schrumpfeigenschaften während der Folienextrusion ist das sogenannte Aufblasverhältnis (ABV). Beim Verlassen der Schmelze aus dem ringförmigen Schlauchfolienwerkzeug wird die Folienblase unter kontinuierlicher Aufweitung bis zum endgültigen Schlauchdurchmesser und der gewünschten Foliendicke ausgezogen und mittels eines Kühlrings intensiv gekühlt. Diese Aufweitung wird durch Luft, welche über im Werkzeug befindliche Luftkanäle in das Innere der Folienblasen eingeleitet wird, erzeugt. Gleichzeitig wird die Foliendicke über die Abzugsgeschwindigkeit eingestellt. Beim Erreichen der gewünschten Folienabmessungen wird die Luftzufuhr gestoppt bzw. auf gleichem Niveau gehalten. Das eingeschlossene Luftvolumen im Inneren der entstandenen Folienblase bestimmt den endgültigen Schlauchdurchmesser. Das Verhältnis dieses Schlauchdurchmessers der erstarrten Folie zum Düsendurchmesser des Schlauchfolienwerkzeuges wird als das Aufblasverhältnis (ABV) bezeichnet. Wird ein kleines Aufblasverhältnis von z.B. 2 gewählt, wird die Folie stärker in Längsrichtung orientiert, was bessere Schrumpfeigenschaften in dieser Richtung zur Folge hat. Bei großen Aufblasverhältnissen von z.B. 4 erfolgt die Orientierung stärker in Querrichtung was höhere Schrumpfwerte in dieser Richtung bei gleicher Foliendicke zur Folge hat.

Im Folgenden werden die Eigenschaften von Feinschrumpfolien am Beispiel von Sammelverpackungen in der Getränkeindustrie näher untersucht. Diese Ergebnisse lassen sich weitgehend auf Schwerschrumpffolien übertragen.

Zur Herstellung von Schrumpffolien sind die eingangs erwähnten Polymermischungen besonders gut geeignet, die aus einem aliphatisch/aromatischen (teilaromatischen) Polyester A und einem Mischungspartner B wie insbesondere Polymilchsäure bestehen.

Unter teilaromatischen Polyestern auf Basis von aliphatischen Diolen und aliphatisch/aromatischen Dicarbonsäuren werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₆-C₁₈-Dicarbonsäuren wie Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Wie eingangs erwähnt sind für das erfindungsgemäße Verfahren zur Herstellung von Schrumpffolien biologisch abbaubare, aliphatisch-aromatischer Polyester A geeignet, die enthalten:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
   geeignet.

Bevorzugt eingesetzte aliphatisch-aromatischen Polyester A enthalten:
i) 52 bis 65 und insbesondere 58 mol %, bezogen auf die Komponenten i bis ii, eines oder mehrerer Dicarbonsäurederivate oder Dicarbonsäuren ausgewählt aus der Gruppe bestehend aus Bernsteinsäure, Azelainsäure, Brassylsäure und vorzugsweise Adipinsäure, insbesondere bevorzugt Sebazinsäure;
ii) 48 bis 35 und insbesondere 42 mol %, bezogen auf die Komponenten i bis ii, eines Terephthalsäurederivats;
iii) 98 bis102 mol %, bezogen auf die Komponenten i bis ii, 1,4-Butandiol und
iv) 0 bis 2 Gew.-%, vorzugsweise 0, 01 bis 2 Gew.-%, bezogen auf das Gesamtgewicht der Komponenten i bis iii, eines Kettenverlängerers und /oder Vernetzers ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere eines epoxidhaltigen Poly(meth)acrylats) und /oder einem mindestens trifunktionellen Alkohol oder einer mindestens trifunktionellen Carbonsäure.

Zur Herstellung von Schrumpffolien sind insbesondere aliphatisch-aromatische Polyester mit einem hohen Anteil an aliphatischer Dicarbonsäure von 52 bis 65 und insbesondere bevorzugt von 52 bis 58 mol %, geeignet. Mit einem höheren Anteil der aliphatischen Dicarbonsäure in den aliphatisch-aromatischen Polyestern lassen sich dünnere Schichten realisieren.

Als aliphatische Dicarbonsäuren eignen sich vorzugsweise Adipinsäure und insbesondere bevorzugt Sebazinsäure. Sebazinsäurehaltige Polyester haben den Vorteil, dass sie auch als nachwachsender Rohstoff zur Verfügung stehen sind und sich zu dünneren Folien ausziehen lassen.

Die Synthese der beschriebenen Polyester A erfolgt nach den in WO-A 92/09654, WO-A 96/15173 oder vorzugsweise in WO-A 09/127555 und WO-A 09/127556 beschriebenen Verfahren, vorzugweise,in einer zweistufigen Reaktionskaskade. Zunächst werden die Dicarbonsäurederivate zusammen mit dem Diol in Anwesenheit eines Umesterungskatalysators zu einem Präpolyester umgesetzt. Dieser Präpolyester weist im Allgemeinen eine Viskositätszahl (VZ) von 50 bis 100mL/g, vorzugsweise 60 bis 80 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie über die Kompostierung unmittelbar in die Umwelt gelangen können.

Die Polyester A werden anschließend in einem zweiten Schritt nach den in WO-A 96/15173 und EP-A 488 617 beschriebenen Verfahren hergestellt. Der Präpolyester wird mit Kettenverlängeren ivb), beispielsweise mit Diisocyanaten oder mit epoxidhaltigen Polymethacrylaten in einer Kettenverlängerungsreaktion zu einem Polyester mit einer VZ von 50 bis 450 mL/g, vorzugsweise 80 bis 250 mL/g umgesetzt.

In der Regel werden 0,01 bis 2 Gew-%, vorzugsweise 0,1 bis 1,0 Gew.-% und insbesondere bevorzugt 0,1 bis 0,3 Gew.-% bezogen auf das Gesamtgewicht der Komponenten i bis iii, eines Vernetzers (iva) und/oder Kettenverlängerers (ivb) ausgewählt aus der Gruppe bestehend aus: einem polyfunktionellen Isocyanat, Isocyanurat, Oxazolin, Epoxid, Carbonsäureanhydrid , einem mindestens trifunktionellen Alkohol oder einer mindestens trifunktionellen Carbonsäure eingesetzt. Als Kettenverlängerer ivb kommen polyfunktionelle und insbesondere difunktionelle Isocyanate, Isocyanurate, Oxazoline, Carbonsäureanhydrid oder Epoxide in Frage.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten iv lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen iv wirken scherentzähend, d.h. die Viskosität bei höheren Schergeschwindigkeiten wird geringer.

### Beispiele für Kettenverlängerer werden im Folgenden näher beschrieben.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mwder Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat ivb werden vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Uretdiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

2,2'-Bisoxazoline sind im allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Die Polyester A weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol; Gewichtsverhältnis 50/50). Der Schmelzpunkt liegt im Bereich von 85 bis 150, bevorzugt im Bereich von 95 bis 140°C.

Die aliphatische Dicarbonsäure i wird in 40 bis 70 mol % vorzugsweise 52 bis 65 mol% und insbesondere bevorzugt 52 bis 58 mol%, bezogen auf die Säurekomponenten i und ii eingesetzt. Sebazinsäure, Azelainsäure und Brassylsäure sind aus nachwachsenden Rohstoffen, insbesondere aus Rizinusöl zugänglich.

Die Terephthalsäure ii wird in 60 bis 30 mol % vorzugsweise 48 bis 35 mol% und insbesondere bevorzugt 48 bis 42 mol%, bezogen auf die Säurekomponenten i und ii eingesetzt.

Terephthal- und aliphatische Dicarbonsäure können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Diisopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

1,4-Butandiol ist aus nachwachsenden Rohstoffen zugänglich. WO-A 09/024294 offenbart ein biotechnologisches Verfahren zur Herstellung von 1,4-Butandiol ausgehend von unterschiedlichen Kohlehydraten mit Mikroorganismen aus der Klasse der Pasteurellaceae.

In der Regel wird zu Beginn der Polymerisation das Diol (Komponente iii) zu den Säuren (Komponenten i und ii) in einem Verhältnis von Diol zu Disäuren von 1,0 bis 2,5 : 1 und vorzugsweise 1,3 bis 2,2 : leingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 : 1 verstanden.

Die genannten Polyester können Hydroxy- und/oder Carboxylend-gruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

In einer bevorzugten Ausführungsform werden 1 bis 80 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern zugesetzt.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Unter Naturfasern werden zum Beispiel Cellulosefasern, Hanffasern, Sisal, Kenaf, Jute, Flax, Abacca, Kokosfaser oder Cordenkafasem verstanden.

Als bevorzugte faserförmige Füllstoffe seien Glasfasern, Kohlenstofffasern, Aramid-Fasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30µm, bevorzugt 6 bis 20µm und besonderes bevorzugt von 8 bis 15µm auf. Die Faserlänge im Compound beträgt in der Regel 20µm bis 1000µm, bevorzugt 180 bis 500µm und besonderes bevorzugt 200 bis 400µm.

Die biologisch abbaubaren Polyester A können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Die Herstellung der biologisch abbaubaren Polymermischungen aus den einzelnen Komponenten (Polyester A und Polymer B) kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden.

Typische Polymermischungen enthalten:
- 20 bis 90 Gew.- %, vorzugsweise 45 bis 70 Gew.- % eines Polyesters A und
- 80 bis 10 Gew.-%, vorzugsweise 55 bis 30 Gew.-%, eines oder mehrerer Polymere B ausgewählt aus der Gruppe bestehend aus: Polymilchsäure (die insbesondere bevorzugt ist), Polyethylencarbonat, Polypropylencarbonat, Polycaprolacton, Polyhydroxyalkanoat, Chitosan und Gluten und eines oder mehrerer aliphatischen Polyesters wie Polybutylensuccinat, Polybutylenadipat, Polybutylensebacat, Polybutylensuccinat-adipat oder Polybutylensuccinat-sebacat; und
- 0 bis 2 Gew.-% eines Verträglichkeitsvermittlers C.

Vorzugsweise enthalten die Polymermischungen ihrerseits 0,05 bis 2 Gew.-% eines Verträglichkeitsvermittlers C. Bevorzugte Verträglichkeitsvermittler sind Carbonsäureanhydride wie Maleinsäureanhydrid und insbesondere die zuvor beschriebenen epoxidgruppen-haltige Copolymere auf Basis Styrol, Acrylsäureester und/oder Methacrylsäureester. Die Epoxidgruppen tragenden Einheiten sind vorzugsweise Glycidyl(meth)acrylate. Epoxidgruppen-haltige Copolymere des obengenannten Typs werden beispielsweise von der BASF Resins B.V. unter der Marke Joncryl^{®} ADR vertrieben. Als Verträglichkeitsvermittler besonders geeignet ist beispielsweise Joncryl^{®} ADR 4368.

Als biologisch abbaubaren Polyester B ist beispielsweise Polymilchsäure geeignet. Polymilchsäure mit dem folgenden Eigenschaftsprofil wird bevorzugt eingesetzt:
- einer Schmelzvolumenrate (MVR bei 190° C und 2.16 kg nach ISO 1133) von 0.5 bis 15 bevorzugt 1 bis 9, besonders bevorzugt 2 bis 6 ml/10 Minuten
- einem Schmelzpunkt unter 180° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise von NatureWorks® das Ingeo® 2002 D, 4032 D, 8251 D, 3251 D und insbesondere 4042 D und 4043 D (Polymilchsäuren der Fa. NatureWorks).

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten oder 3-Hydroxyhexanoat umfasst. Poly-3-hydroxybutyrate-co-4-hydroxybutyrate sind insbesondere von der Fa. Teiles bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht Mw von 100.000 bis 1.000.000 und vorzugsweise von 300.000 bis 600.000 auf.

Polycaprolacton wird von der Fa. Daicel unter dem Produktnamen Placcel^{®} vermarktet.

Unter Polyalkylencarbonat wird insbesondere Polyethylencarbonat und Polypropylencarbonat verstanden. Polyethylencarbonat ist ein Polymer hergestellt aus Ethylenoxid und Kohlendioxid. Polypropylencarbonat ist ein Polymer hergestellt aus Propylenoxid und Kohlendioxid.

Die eingangs erwähnten Polyester und Polymermischungen weisen eine hohe biologische Abbaubarkeit bei gleichzeitig guten Filmeigenschaften auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise lässt man gemäß DIN EN 13432 CO₂-freie Luft durch gereiften Kompost während des Kompostierens strömen. Der Kompost wird einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Als Schrumpffolien haben sich mehrlagige Ausführungsformen durchgesetzt. Üblicherweise werden 2 bis 7 Schichten und vorzugsweise 2 bis 3 Schichten in Schrumpffolien eingesetzt. Dies liegt daran, dass eine einzige Folie nicht allen Anforderungen optimal gerecht wird.

So muss eine äußere Schicht oder Deckschicht, in der Regel beispielsweise kratzfest, temperaturstabil und wenig klebend sein. Die Klebeneigung muss reduziert sein, um allein schon ein Zusammenbacken der Folie im Herstellprozess zu vermeiden. Vorzugsweise besteht sie aus einer Mischung aus 10 bis 100 Gew.-% eines aliphatisch-aromatischen Polyesters und 90 bis 0 Gew.-% Polymilchsäure und 0 bis 10 Gew.-% einer Wachsformulierung mit 0 bis 5 Gew.-% Wachs, 0 bis10 Gew.-% Dispergierhilfe (z.B. Metallsalze der Stearinsäure, Ölsäure, Ethylen-bis-Stearylamid, Säureamide (z.B. Erucasäureamid, Ölsäureamid)) und 0 bis 5 % Antiblockmittel. Eine Deckschicht aus aliphatisch-aromatischem Polyester hat Vorteile in der Transparenz und in der Bedruckbarkeit. Auch lassen sich so Ausführungsformen von Schrumpffolien bereitstellen, die einen Spiegelglanz aufweisen. Schließlich weisen aliphatisch-aromatische Polyester wie Ecoflex^{®} eine hervorragende Siegelnahtfestigkeit auf, sodass sich Schrumpffolien mit Ecoflex^{®} als Deckfolie hervorragend zum versiegeln eignen.

Die mittlere Schicht ist in der Regel steifer und kann auch als Trägerschicht bezeichnet werden. Die mittlere Schicht enthält 30 bis 80 Gew.-% und insbesondere bevorzugt 30 bis 55 Gew.- % Polymilchsäure und 20 bis 70 Gew.-%, insbesondere bevorzugt 45 bis 70 Gew.- % des aliphatisch-aromatischen Polyesters. Die mittlere Schicht umfasst üblicherweise 40 bis 70 % der Dicke der Schrumpffolie.

Die innere Schicht stellt die Kontaktschicht zu den zu verpackenden Gütern her. Sie muss in der Regel weich sein und nicht auf den Gütern haften. Vorzugsweise besteht sie aus einer Mischung aus 10 bis 100 Gew.-% eines aliphatisch-aromatischen Polyesters und 90 bis 0 Gew.-% Polymilchsäure und 0 bis 10 Gew.-% einer Wachsformulierung mit 0 bis 5 Gew.-% Wachs, 0 bis10 Gew.-% Dispergierhilfe (z.B. Metallsalze der Stearinsäure, Ölsäure, Ethylen-bis-Stearylamid, Säureamide (z.B. Erucasäureamid, Ölsäureamid)) und 0 bis 5 % Antiblockmittel. Eine Innenschicht enthält besonders bevorzugt 45 bis 100 % eines aliphatisch-aromatischen Polyesters und 0 bis 55 % Polymilchsäure. Eine Innenschicht aus aliphatisch-aromatischem Polyester hat Vorteile in der Transparenz und in der Bedruckbarkeit. Auch lassen sich so Ausführungsformen von Schrumpffolien bereitstellen, die einen Spiegelglanz aufweisen. Schließlich weisen aliphatisch-aromatische Polyester wie Ecoflex^{®} eine hervorragende Siegelnahtfestigkeit auf, sodass sich Schrumpffolien mit Ecoflex^{®} als Deckfolie hervorragend zum versiegeln eignen.

Die dreilagige Schrumpffolie ist bevorzugt. Die Folie setzt sich vorzugsweise wie folgt zusammen:
i) äußere Schichten (Deck- und Innenschicht) enthaltend eine Mischung aus 10 bis 100 Gew.-% eines aliphatisch-aromatischen Polyesters und 90 bis 0 Gew.-% Polymilchsäure und 0 bis 10 Gew.-% einer Wachsformulierung mit Wachs, Dispergierhilfe und Antiblockmitteln;
ii) eine mittlere Schicht enthaltend 30 bis 55 Gew.- % Polymilchsäure und 45 bis 70 Gew.- % des aliphatisch-aromatischen Polyesters.

Die zweilagige Schrumpffolie ist ebenfalls bevorzugt. Die Beschichtung setzt sich vorzugsweise wie folgt zusammen:
i) eine äußeren Schicht enthaltend eine Mischung aus 10 bis 100 Gew.-% eines aliphatisch-aromatischen Polyesters und 90 bis 0 Gew.-% Polymilchsäure und 0 bis 10 Gew.-% einer Wachsformulierung mit Wachs, Dispergierhilfe und Antiblockmitteln;
ii) eine mittlere Schicht enthaltend 30 bis 55 Gew.- % Polymilchsäure und 45 bis 70 Gew.- % des aliphatisch-aromatischen Polyesters.

Zur Herstellung mehrlagiger Schrumpffolien werden im Allgemeinen Coextrusionsverfahren herangezogen.

Ein geeignetes Laminierverfahren, um 2 oder mehrere Folien zu einem Laminat zu verbinden ist die Extrusionskaschierung mit Schmelze- oder Dispersionsklebstoffen, die für Schrumpffolien ebenfalls geeignet ist.

Wie erwähnt unterscheidet man Schwerschrumpffolien, welche überwiegend zur Sicherung von auf Paletten gestapelten Gütern z.B. in der Kunststoffindustrie (Sackwaren) oder in der Bauindustrie (Ziegel, Steine, Baustoffe, Bündelung, Holz & Panelen, Isoliermaterialien) Kataloge, Kohle/Holzbriketts, Kosmetika, Lacke und Dosen, Laminat & Parkett, Matrazen, Teppiche, Textilien, Zeitschriften u.s.w. eingesetzt werden und Feinschrumpffolien, welche z.B. für Sammelverpackungen (z.B. Six-Packs von 0,5 I, 1 l oder 1,5 I PET Flaschen) in der Getränkeindustrie (Soft Drinks, Bier, Mineralwasser, Milch) oder für Konserven oder Multipacks eingesetzt werden.

Die mit dem erfindungsgemäßen Verfahren hergestellten Feinschrumpffolien besitzen üblicherweise eine Foliendicke von ca. 30 bis 80 µm, während Schwerschrumpffolien in der Regel Foliendicken von 100 bis 180 µm aufweisen und sind bei gleichen Schrumpfwerten um in der Regel 30 bis 50 % dünner als vergleichbare Schrumpffolien aus LDPE.

Für flexible, weiche Schrumpffolien empfiehlt sich der Einsatz von Polyesterblends, die in der kohärente Phase aus einem aliphatisch-aromatischer Polyester A bestehen, während für hochsteife Schrumpffolien, wie Sie z. B. bei der Verpackung von CD, DVD, Büchern, Spielen etc. Polyesterblends mit Komponente B in der kohärenten Phase zum Einsatz kommen.

Schließlich lassen sich Schrumpffolien aus PE wie erwähnt erst bei Temperaturen von ca. 180 °C und höher in sogenannten Schrumpfautomaten verarbeiten. Die hohen Verarbeitungstemperaturen führen zu hohen Energiekosten und können auch negative Folgen für die zu verpackenden Güter haben. Die mit dem erfindungsgemäßen Verfahren hergestellten Schrumpffolien lassen sich in der Regel bei 20 bis 50°C tieferen Temperaturen, vorzugsweise bei Temperaturen unter 150°C in Schrumpfautomaten verarbeiten.

### Versuchsaufbau:

### 1. Schlauchfolienanlage

Die Schrumpffolien wurden auf einer für Polyolefine ausgelegten 3 Schicht Schlauchfolien Coextrusionsanlage hergestellt, die dem neusten Stand der Technik entspricht. Die Ausrüstung der Schlauchfolienanlage war wie folgt:
- Extruder: Schicht A: 65x30L/D, Schicht B: 75x30UD, Schicht C: 65x30L/D Alle 3 Extruder waren mit einer Standard Barriereschnecke mit Kreuzlochmischteil und genuteter Einzugszone sowie einer gravimetrischen Dosierstation für 3-4 Komponenten (Chargenmischer) ausgestattet.
- 3-Schicht Blaskopf mit einem Düsendurchmesser von 225 mm und einem Düsenspalt von 1,5 mm
- Kapazitive Dickenmessung
- Dickenregelung über Segment Kühlring
- Doppellippenkühlring -
- Innen- und Außenkühlung mit gekühlter Luft
- 2 Wickelstationen.

### 2. Folienherstellung

Da wie bereits erwähnt das Aufblasverhältnis (ABV) ein wesentlicher Parameter zur Beeinflussung der Schrumpfeigenschaften ist wurde dieses während der Folienherstellung in den Stufen 2:1, 3:1 und 4:1 variiert. Alle anderen Maschineneinstellungen wurden so weit wie möglich konstant gehalten:
- Konstante Maschinenparameter:
   Temperaturen Extruder 1 (Schicht A): 155-160°C
   Temperaturen Extruder 2 (Schicht B): 155-160°C
   Temperaturen Extruder 3 (Schicht C): 155-160°C
   Temperaturen Blaskopf: 170°C
   Schmelzetemperatur: 170-180°C (für alle 3 Extruder)
   Foliendicke: 30 µm
   Gesamtausstoß: 190 kg/h
   Kühllufttempertur: 30°C
   Dickenverteilung: Schicht A: 20% / Schicht B: 60% / Schicht C: 20%
- Variable Maschinenparameter
   Aufblasverhältnis: 2:1 (entspricht Folienbreite: 707 mm)
   Aufblasverhältnis: 3:1 (entspricht Folienbreite: 1061 mm)
   Aufblasverhältnis: 4:1 (entspricht Folienbreite:1414 mm)
- Einsatzstoffe
   Bei der Herstellung der Schrumpffolien kamen die folgenden Polyester und Polyestermischungen zum Einsatz:

### Polyester A1

Als Referenzmaterial diente zunächst Ecoflex® F BX 7011 (ein Polybutylenterephthalatadipat der Fa. BASF SE das wie folgt hergestellt wurde: 87,3 kg Dimethylterephthalat, 80,3 kg Adipinsäure, 117 kg 1,4-Butandiol und 0,2 kg Glycerin wurden zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert. Der so erhaltene Polyester A1 wies eine Schmelztemperatur von 119°C und ein Molekulargewicht (Mₙ) von 23000 g/mol auf).

### Polyester A1/Wachs Blend

Ein Blend aus: 97 % A1 + 2% Antiblock-Masterbatch Ecoflex Batch AB1 (Polymermischung aus 40 Gew.-% A1 und 60 Gew.-% Calciumcarbonat) + 1 % Slip-Masterbatch Ecoflex Batch SL1 (Polymermischung aus 90 Gew.-% A1 und 10 Gew.-% Erucasäureamid).

### Polyester A2

Polybutylenterephthalat-sebacat , das wie folgt hergestellt wurde: analog Polyester A1 wurden folgende Ausgangsstoffe zu einem Präpolyester umgesetzt: Dimethylterephthalat (350.55 g), 1,4-Butandiol (450.00 g), Glycerin (1.21 g), TBOT (1.3 g), Sebazinsäure (411.73 g). Anschließend wurden bei 240°C 3,4 g Hexamethylendiisocyanat innerhalb 1 h langsam zudosiert.

### Polyestermischung A1B1C1-1

Ein Blend aus: 67,8 % Polyester A1, 32% PLA NatureWorks® 4042D (Komponente B1) und 0,2 % Joncryl ADR 4368 CS (Komponente C1).

### Polyestermischung A1B1C1-2

Ein Blend aus: 54,7 % Polyester A1, 45% PLA NatureWorks 4042D® (Komponente B1) 0,2 % Joncryl ADR4368CS (Komponente C1)und 0,1 % Erucasäureamid.

### Polyestermischung A2B1 C1-3

Ein Blend aus: 54,7 % Polyester A2, 45% PLA NatureWorks 4042D® (Komponente B1) 0,2 % Joncryl ADR 4368CS (Komponente C1)und 0,1 % Erucasäureamid.

Alle Folien wurden mit einer Foliendicke von 20-30 µm hergestellt. Falls Ecoflex F BX 7011 in den Außenschichten zum Einsatz kam

| Nr. | Dicke [µm] | Extruder 1, Schicht A (20 %) | Extruder 2, Schicht B (60%) | Extruder 3, Schicht C (20%) | ABV |
|---|---|---|---|---|---|
| V1 | 30 | A1/Wax | Polyester A1 | A1/Wax | 2:1 |
| 2 | 30 | A1/Wax | A1B1C1-1 | A1/Wax | 2:1 |
| 3 | 30 | A1/Wax | A1B1C1-1 | A1/Wax | 3:1 |
| 4 | 30 | A1/Wax | A1B1C1-1 | A1/Wax | 4:1 |
| 5 | 30 | A1/Wax | A1B1C1-2 | A1/Wax | 2:1 |
| 6 | 30 | A1/Wax | A1B1C1-2 | A1/Wax | 3:1 |
| 7 | 30 | A1/Wax | A1B1C1-2 | A1/Wax | 4:1 |
| 8 | 30 | A1B1C1-1 | A1B1C1-1 | A1B1C1-1 | 2:1 |
| 9 | 30 | A1B1C1-1 | A1B1C1-1 | A1B1C1-1 | 3:1 |
| 10 | 30 | A1B1C1-1 | A1B1C1-1 | A1B1C1-1 | 4:1 |
| 11 | 30 | A1B1C1-2 | A1B1C1-2 | A1B1C1-2 | 2:1 |
| 12 | 30 | A1B1C1-2 | A1B1C1-2 | A1B1C1-2 | 3:1 |
| 13 | 30 | A1B1C1-2 | A1B1C1-2 | A1B1C1-2 | 4:1 |
| 14 | 30 | A2B1C1-3 | A2B1C1-3 | A2B1C1-3 | 2:1 |
| 15 | 30 | A2B1C1-3 | A2B1C1-3 | A2B1C1-3 | 3:1 |
| 16 | 30 | A2B1C1-3 | A2B1C1-3 | A2B1C1-3 | 4:1 |
| 17 | 20 | A2B1C1-3 | A2B1C1-3 | A2B1C1-3 | 3:1 |

### 3. Schrumpfversuche

Für die Schrumpfversuche stand eine Laborschrumpfanlage mit beheiztem, Schrumpftunnel und einstellbarer, geregelter Temperatur des Heißluftstroms sowie einer Siegelstation mit zwei Siegelbalken und geregelter Siegeltemperatur zur Verfügung (Fabrikat Pentatec, Italien). Bei der Durchführung der Schrumpfversuche wurden 6 x 0,5 I PET Getränkeflaschen mit einem Folienabschnitt von ca. 540 mm Breite und ca. 710 mm Länge eingeschlagen und die Folien an der Stirnseite mit Hilfe der Siegelstation bei ca. 120°C verschweißt. Danach wurden die Gebinde auf ein Transportband bei gleichbleibender Vorschubgeschwindigkeit durch den Schrumpftunnel geführt. Die Schrumpftemperatur wurde dabei auf ca. 150-160 °C eingestellt. Die Verweilzeit des Gebindes im Schrumpftunnel betrug ca. 30 sec. Am Ende des Schrumpftunnels wurden die Gebinde mit Hilfe eins Ventilators abgekühlt und die Folie somit verfestigt. Sämtliche hergestellten Schrumpfgebinde wurden nach dem Schrumpf- und Abkühlvorgang hinsichtlich des Schrumpfergebnisses (eng anliegende Folie etc.) und der Haltekräfte beurteilt.

### 4. Ergebnisse

### 4.1 Mechanische Folieneigenschaften

Zur Beurteilung der mechanischen Folieneigenschaften wurden bei sämtlichen Folien ein Zugversuch nach ISO 527 und ein Durchstoßversuch nach DIN 53373 durchgeführt. Zur Beurteilung des Steifigkeit/Zähigkeits-Verhältnisses wurde die Zugfestigkeit (statische Beanspruchung) und die Durchstoßarbeit (dynamische Beanspruchung) näher betrachtet und mit einer LDPE Folie mit einer Foliendicke 50 µm, welche den gängigen Standard für Feinschrumpffolien repräsentiert, verglichen:

| Zugfestigkeit nach ISO 527 | | | | | | | | |
|---|---|---|---|---|---|---|---|---|
| | LDPE Film, | | | | | | | |
| | 50µm | **V1** | **2** | **5** | **8** | **11** | **14** | **17** |
| MD | 25 | 39 | 33 | 36 | 38 | 39 | 37 | 38 |
| CD | 24 | 37 | 25 | 24 | 25 | 23 | 23 | 24 |

| Durchstoßarbeit nach DIN 53373 | | | | | | | | |
|---|---|---|---|---|---|---|---|---|
| | **LDPE** Film, 50 µm | **V1** | **2** | **5** | **8** | **11** | **14** | **17** |
| | 23 | 22 | 23 | 24 | 30 | 34 | 33 | 20 |

Wie aus den Tabellen zu erkennen ist können zu einer 50 µm LDPE Folie vergleichbare oder sogar bessere Festigkeits- (Zugfestigkeit) und Zähigkeitseigenschaften erfindungsgemäß hergestellten Schrumpffolien mit einer Foliendicke von nur 20 bis 30 µm erreicht werden. Insbesondere Schrumpffolien mit einem höheren PLA Anteil erreichen eine Wanddickenreduzierung von bis zu 40% bei gleicher Mechanik. Hierbei sind insbesondere die Schrumpffolien mit der Nr. 11, 14 und 17 hervorzuheben, welche mit einem PLA Anteil von 45 % hergestellt wurden.

### 4.2 Schrumpfeigenschaften

Zur Beurteilung der Schrumpfeigenschaften wurden neben einer reinen Sichtprüfung des Schrumpfgebindes Schrumpfversuche in Anlehnung an die DIN 53377 bzw. ISO 11501 durchgeführt. Dabei wurden aus den Folien 100x100mm Folienproben herausgeschnitten und in Längsrichtung ca.10 mm eingeschnitten. Dieser Einschnitt dient lediglich einer Kennzeichnung der Längsrichtung zur späteren Bestimmung des Schrumpf. Für die Schrumpfprüfung wurden die Folienmuster in ein Thermo-Ölbad (Silikon) getaucht, wobei sich die Folien während der Prüfung in einem Gitterkorb befinden um einen ungehinderten freien Schrumpf zu ermöglichen. Die Schrumpfprüfungen wurden unter folgenden Prüfbedingungen durchgeführt:

| | |
|---|---|
| Temperaturbereich: | 90-150°C |
| Wertaufnahme: | in 10°C Schritten |
| Schrumpfzeit: | 60 s |

Der Schrumpf in Prüfrichtung Längsrichtung (MD) bzw. Querrichtung (CD) ergibt sich aus der Längenänderung bezogen auf die Ausgangslänge.

Wie die folgende Tabelle zeigt hat das Aufblasverhältnis (ABV) einen entscheidenden Einfluss auf die eingebrachten Orientierungen und damit auf den Schrumpf bei Wärmeeinbringung. Je größer das Aufblasverhältnis umso niedriger der Schrumpf in Längsrichtung und umso größer der Schrumpf in Querrichtung. Bei der Folienextrusion der hier untersuchten Polyester und Polyestermischungen sollte vorzugsweise ein Aufblasverhältnis von 2:1 bis 3:1 gewählt werden um ein möglichst hohe Orientierung in Längsrichtung zu erreichen.

**Tabelle: Schrumpfwerte in [%], Längsrichtung, Thermo-Ölbad 60°C, 60 sec**

| °C | **14** | **15** | **16** |
|---|---|---|---|
| | ABV 2:1 | ABV 3:1 | ABV 4:1 |
| 90 | 33 | 27 | 22 |
| 100 | 44 | 39 | 34 |
| 110 | 53 | 47 | 44 |
| 120 | 61 | 60 | 59 |
| 130 | 70 | 68 | 65 |
| 140 | 81 | 70 | 70 |
| 150 | 91 | 85 | 80 |

**Tabelle: Schrumpfwerte in [%], Querrichtung, Thermo-Ölbad 60°C, 60 sec**

| | **14** | **15** | **16** |
|---|---|---|---|
| °C | ABV 2:1 | ABV 3:1 | ABV 4:1 |
| 90 | 5 | 13 | 16 |
| 100 | 12 | 20 | 26 |
| 110 | 19 | 30 | 33 |
| 120 | 20 | 39 | 43 |
| 130 | 24 | 43 | 49 |
| 140 | 26 | 45 | 50 |
| 150 | 17 | 40 | 51 |

Aus den Schrumpfverhalten lässt sich weiterhin erkennen, dass die Schrumpfwerte bei ca. 120 °C sowie höheren Temperaturen ähnlich stark ausgeprägt sind, was durch in diesem Temperaturbereich starken Schrumpfanteil des in allen Mischungen enthaltenen Polyesters A1 zu erklären ist. Bei Temperaturen kleiner 120°C wird das Schrumpfverhalten wesentlich durch das in den Rezepturen enthaltene PLA beeinflusst. Die im Folgenden dargestellten Schrumpfkurven zeigen das Schrumpfverhalten der erfindungsgemäß hergestellten Folien im Vergleich zur Standard LDPE Folie. Insbesondere in einem Temperaturbereich von 90 bis120°C fangen die erfindungsgemäß hergestellten Folien wesentlich früher an zu schrumpfen als die herkömmliche LDPE Schrumpffolie. Dieses Verhalten ist umso ausgeprägter je höher der PLA Anteil in der jeweiligen Folienrezeptur ist. Der frühere Schrumpfbeginn führt zu einem Schrumpfverhalten mit einem wesentlich breiteren Schrumpf-Fenster im Vergleich zum LDPE. Durch den früheren Schrumpfbeginn können außerdem niedrigere Schrumpftemperaturen am Schrumpfofen eingestellt werden. Bei den hier durchgeführten Schrumpfversuchen konnte die Temperatur auf ca. 150°C abgesenkt werden, während für LDPE Folien gewöhnlich Temperaturen von ca. 180°C verwendet werden. Dieses Verhalten ist im besonderen Maße bei durch auf Sebazinsäure (A2) basierenden Polyesterblends (Nr. 14 und Nr.17) zu erkennen. Der geringere Schmelzpunkt des auf Sebacinzäure basierenden Polyester A2 (der Schmelzpunkt gemessen mittels DSC nach ISO 11357-3 liegt für A2 bei 110°C und für A1 bei 118°C) im Polyesterblend führt bereits bei niedrigen Temperaturen zu hohen Schrumpfwerten.

Die Sichtprüfung der Schrumpfgebinde, sowie ein Tragetest mit Transportbändern, welche auf die Gebinde aufgeklebt werden, haben ergeben, dass die Gebinde bei normalen Transportbewegungen nicht zerstört werden und den Belastungen stand halten.

Abschießend lässt sich sagen, dass zum Erreichen eines ausgewogenen Verhältnisses von Festigkeits-, Zähigkeitseigenschaften bei gleichzeitig optimierten Schrumpfeigenschaften ein PLA Anteil von 30 bis 55 Gew.-% im Polyesterblend gewählt werden sollte, Komponente A sollte die kontinuierliche Phase bilden. Das Aufblasverhältnis bei der Folienherstellung sollte vorzugsweise bei ca. 2:1 bis 3:1 liegen. Durch Variation des Aufblasverhältnisses können eventuelle Abweichungen in Längs- und Querrichtung eingestellt werden.

**Tabelle: Schrumpfwerte in [%], Längsrichtung, Thermo-Ölbad 60°C, 60 sec**

| °C | **LDPE Film** 50 µm | **V1** | **2** | **5** | **8** | **11** | **14** | **17** |
|---|---|---|---|---|---|---|---|---|
| 90 | 0 | 2 | 1 | 6 | 3 | 9 | 33 | 30 |
| 100 | 0 | 11 | 17 | 25 | 19 | 22 | 44 | 44 |
| 110 | 2 | 40 | 36 | 45 | 42 | 43 | 53 | 55 |
| 120 | 61 | 71 | 61 | 66 | 52 | 56 | 61 | 60 |
| 130 | 77 | 80 | 76 | 78 | 68 | 70 | 70 | 70 |
| 140 | 78 | 87 | 87 | 85 | 88 | 85 | 81 | 80 |
| 150 | 80 | 96 | 96 | 96 | 96 | 95 | 92 | 92 |

**Tabelle: Schrumpfwerte in [%], Querrichtung, Thermo-Ölbad 60°C, 60 sec**

| °C | **LDPE Film** 50 µm | **V1** | **2** | **5** | **8** | **11** | **14** | **17** |
|---|---|---|---|---|---|---|---|---|
| 90 | 1 | -1 | 1 | 0 | 3 | 9 | 33 | 30 |
| 100 | 1 | -5 | -2 | 1 | 19 | 22 | 44 | 44 |
| 110 | 1 | -9 | -3 | 5 | 42 | 43 | 53 | 55 |
| 120 | 9 | -9 | -3 | 9 | 52 | 56 | 61 | 60 |
| 130 | 13 | -10 | -3 | 10 | 68 | 70 | 70 | 70 |
| 140 | 13 | -16 | -8 | 10 | 88 | 85 | 81 | 80 |
| 150 | 17 | -19 | -20 | -10 | 96 | 95 | 92 | 92 |

### 4.3 Siegelnahtfestigkeit

Die Siegelbedingungen wurden in Anlehnung an DIN 55529 festgelegt. Die Siegeltemperatur wurde zwischen 90 und 150°C variiert. Die Wertaufnahme erfolgte in 10°C Schritten. Die Siegelzeit betrug 0,5 sec bei einem Siegeldruck von 5 bar.

**Tabelle: Siegelnahtfestigkeit**

| Temperatur [°C] | Siegelnahtfestigkeit [N/15mm] **6** | Siegelnahtfestigkeit [N/l5mm] **12** |
|---|---|---|
| 90 | 8,6 | 4,0 |
| 100 | 10,2 | 5,5 |
| 110 | 13,0 | 9,2 |
| 120 | 17,2 | 12,4 |
| 130 | 18,6 | 13,1 |
| 140 | 19,4 | 13,5 |
| 150 | 20,1 | 14,3 |

Die in der Tabelle aufgeführten Werte zeigen, dass Schrumpffolie Nr. 6 mit einer Deckschicht aus Polyester A1 eine höhere Siegelnahtfestigkeit aufweist als Schrumpffolie Nr. 12 mit einer Deckschicht aus einer Polyestermischung A1B1C1-2.

## Patentansprüche

1. Verfahren zur Herstellung von mehrlagigen Schrumpffolien enthaltend
A) 45 bis 70 Gew.- % eines biologisch abbaubaren, aliphatisch-aromatischen Polyester erhältlich durch Kondensation von:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
und
B) 30 bis 55 Gew.-% Polymilchsäure und
C) 0 bis 2 Gew.-% eines Verträglichkeitsvermittlers,
wobei ein Aufblasverhältnis kleiner oder gleich 4:1 gewählt wird, und
wobei sich mindestens die mittlere Lage wie folgt zusammensetzt:
A) 20 bis 70 Gew.- % eines biologisch abbaubaren, aliphatisch-aromatischen Polyester erhältlich durch Kondensation von:
i) 40 bis 70 mol %, bezogen auf die Komponenten i bis ii, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 60 bis 30 mol %, bezogen auf die Komponenten i bis ii, eines Terephthalsäurederivats;
iii) 98 bis 102 mol %, bezogen auf die Komponenten i bis ii, eines C₂-C₈-Alkylendiols oder C₂-C₆-Oxyalkylendiols;
iv) 0,00 bis 2 Gew.-%, bezogen auf das Gesamtgewicht der Komponenten i bis iii, eines Kettenverlängerers und /oder Vernetzers ausgewählt aus der Gruppe bestehend aus: einem di oder polyfunktionellen Isocyanat, Isocyanurat, Oxazolin , Epoxid, Carbonsäureanhydrid und /oder einem mindestens trifunktionellen Alkohol oder einer mindestens trifunktionellen Carbonsäure;
v) 0,00 bis 50 Gew.-%, bezogen auf das Gesamtgewicht der Komponenten i bis iv, eines organischen Füllstoffs ausgewählt aus der Gruppe bestehend aus: nativer oder plastifizierter Stärke, Naturfasern, Holzmehl und/oder eines anorganischen Füllstoffs ausgewählt aus der Gruppe bestehend aus: Kreide, gefälltes Calciumcarbonat, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum, Glasfasern und Mineralfasern und
vi) 0,00 bis 2 Gew.-%, bezogen auf das Gesamtgewicht der Komponenten i bis iv, mindestens eines Stabilisators, Nukleierungsmittels, Gleit- und Trennmittels, Tensids, Wachses, Antistatikums, Antifog-Mittels, Farbstoffs, Pigments, UV-Absorbers, UV-Stabilisators oder sonstigen Kunststoffadditivs;
und
B) 30 bis 80 Gew.-% Polymilchsäure;
und
C) 0 bis 2 Gew.-% eines Verträglichkeitsvermittlers.

2. Verfahren nach Anspruch 1, wobei die Komponenten i) und ii) des Polyesters A wie folgt definiert sind:
i) 52 bis 65 mol %, bezogen auf die Komponenten i bis ii, eines oder mehrere Dicarbonsäurederivate oder Dicarbonsäuren ausgewählt aus der Gruppe bestehend aus: Bernsteinsäure, Adipinsäure, Sebazinsäure, Azelainsäure und Brassylsäure;
ii) 48 bis 35 mol %, bezogen auf die Komponenten i bis ii, eines Terephthalsäurederivats.

3. Verfahren nach Anspruch 1 oder 2, wobei in Komponente i) des Polyesters A Sebazinsäure oder Gemische von Sebazinsäure mit den anderen Disäuren eingesetzt werden.

4. Verfahren nach den Ansprüchen 1 bis 3, wobei die Polymermischung als Verträglichkeitsvermittler C 0,05 bis 2 Gew.-% eines epoxidhaltigen Poly(meth)acrylats enthält.

5. Verfahren nach den Ansprüchen 1 bis 4 zur Herstellung einer 20 bis 40 µm dicken Feinschrumpffolie.

6. Verfahren nach den Ansprüchen 1 bis 4 zur Herstellung einer 50 bis 180 µm dicken Schwerschrumpffolie.

7. Verfahren nach Anspruch 5 zur Herstellung von Schrumpffolien für Bücher, Flaschen, Dosen und Lebensmittel.

8. Verfahren nach Anspruch 6 zur Herstellung von Schrumpffolien für Paletten und Container.

## Claims

1. A process for producing multilayer shrink films comprising
A) from 45 to 70% by weight of a biodegradable, aliphatic-aromatic polyester obtainable via condensation of:
i) from 40 to 70 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 60 to 30 mol%, based on components i to ii, of a terephthalic acid derivative;
iii) from 98 to 102 mol%, based on components i to ii, of a C₂-C₈ alkylenediol or C₂-C₆ oxyalkylenediol;
iv) from 0.00 to 2% by weight, based on the total weight of components i to iii, of a chain extender and/or crosslinking agent selected from the group consisting of: a di- or polyfunctional isocyanate, isocyanurate, oxazoline, epoxide, and carboxylic anhydride, and/or an at least trihydric alcohol, or an at least tribasic carboxylic acid;
v) from 0.00 to 50% by weight, based on the total weight of components i to iv, of an organic filler selected from the group consisting of: native or plastified starch, natural fibers, and wood flour, and/or of an inorganic filler selected from the group consisting of: chalk, precipitated calcium carbonate, graphite, gypsum, conductive carbon black, iron oxide, calcium chloride, dolomite, kaolin, silicon dioxide (quartz), sodium carbonate, titanium dioxide, silicate, wollastonite, mica, montmorillonite, talc, glass fibers, and mineral fibers, and
vi) from 0.00 to 2% by weight, based on the total weight of components i to iv, of at least one stabilizer, nucleating agent, lubricant and release agent, surfactant, wax, antistatic agent, antifogging agent, dye, pigment, UV absorber, UV stabilizer, or other plastics additive;
and
B) from 30 to 55% by weight of polylactic acid and
C) from 0 to 2% by weight of a compatibilizer,
where a blow-up ratio smaller than or equal to 4:1 is selected, and
where the constitution of at least the middle layer is as follows:
A) from 20 to 70% by weight of a biodegradable, aliphatic-aromatic polyester obtainable via condensation of:
i) from 40 to 70 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 60 to 30 mol%, based on components i to ii, of a terephthalic acid derivative;
iii) from 98 to 102 mol%, based on components i to ii, of a C₂-C₈ alkylenediol or C₂-C₆ oxyalkylenediol;
iv) from 0.00 to 2% by weight, based on the total weight of components i to iii, of a chain extender and/or crosslinking agent selected from the group consisting of: a di- or polyfunctional isocyanate, isocyanurate, oxazoline, epoxide, and carboxylic anhydride, and/or an at least trihydric alcohol, or an at least tribasic carboxylic acid;
v) from 0.00 to 50% by weight, based on the total weight of components i to iv, of an organic filler selected from the group consisting of: native or plastified starch, natural fibers, and wood flour, and/or an inorganic filler selected from the group consisting of: chalk, precipitated calcium carbonate, graphite, gypsum, conductive carbon black, iron oxide, calcium chloride, dolomite, kaolin, silicon dioxide (quartz), sodium carbonate, titanium dioxide, silicate, wollastonite, mica, montmorillonite, talc, glass fibers, and mineral fibers, and
vi) from 0.00 to 2% by weight, based on the total weight of components i to iv, of at least one stabilizer, nucleating agent, lubricant and release agent, surfactant, wax, antistatic agent, antifogging agent, dye, pigment, UV absorber, UV stabilizer, or other plastics additive;
and
B) from 30 to 80% by weight of polylactic acid; and
C) from 0 to 2% by weight of a compatibilizer.

2. The process according to claim 1, where the definitions of components i) and ii) of the polyester A are as follows:
i) from 52 to 65 mol%, based on components i to ii, of one or more dicarboxylic acid derivatives or dicarboxylic acids selected from the group consisting of: succinic acid, adipic acid, sebacic acid, azelaic acid, and brassylic acid;
ii) from 48 to 35 mol%, based on components i to ii, of a terephthalic acid derivative.

3. The process according to claim 1 or 2, where component i) of the polyester A uses sebacic acid or a mixture of sebacic acid with the other diacids.

4. The process according to claims 1 to 3, where the polymer mixture comprises, as compatibilizer C, from 0.05 to 2% by weight of an epoxy-containing poly(meth)acrylate.

5. The process according to claims 1 to 4 for producing a fine-gauge shrink film of thickness from 20 to 40 µm.

6. The process according to claims 1 to 4 for producing a heavy-gauge shrink film of thickness from 50 to 180 µm.

7. The process according to claim 5 for producing shrink films for books, bottles, containers, and food or drink.

8. The process according to claim 6 for producing shrink films for pallets and container systems.

## Revendications

1. Procédé de fabrication de films rétractables multicouches contenant :
A) 45 à 70 % en poids d'un polyester aliphatique-aromatique biodégradable pouvant être obtenu par condensation de :
i) 40 à 70 % en moles, par rapport aux composants i à ii, d'un ou de plusieurs dérivés d'acides dicarboxyliques ou d'acides dicarboxyliques choisis dans le groupe constitué par : l'acide succinique, l'acide adipique, l'acide sébacique, l'acide azélaïque et l'acide brassylique ;
ii) 60 à 30 % en moles, par rapport aux composants i à ii, d'un dérivé de l'acide téréphtalique ;
iii) 98 à 102 % en moles, par rapport aux composants i à ii, d'un alkylènediol en C₂-C₈ ou d'un oxyalkylènediol en C₂-C₆ ;
iv) 0,00 à 2 % en poids, par rapport au poids total des composants i à iii, d'un allongeur de chaîne et/ou d'un agent de réticulation choisi dans le groupe constitué par : un isocyanate, un isocyanurate, une oxazoline, un époxyde, un anhydride d'acide carboxylique di- ou polyfonctionnel et/ou un alcool au moins trifonctionnel ou un acide carboxylique au moins trifonctionnel ;
v) 0,00 à 50 % en poids, par rapport au poids total des composants i à iv, d'une charge organique choisie dans le groupe constitué par : l'amidon naturel ou plastifié, les fibres naturelles, la farine de bois et/ou une charge inorganique choisie dans le groupe constitué par : la craie, le carbonate de calcium précipité, le graphite, le gypse, le noir de carbone conducteur, l'oxyde de fer, le chlorure de calcium, la dolomite, le kaolin, le dioxyde de silicium (quartz), ) le carbonate de sodium, le dioxyde de titane, le silicate, la wollastonite, le mica, la montmorillonite, le talc, les fibres de verre et les fibres minérales, et
vi) 0,00 à 2 % en poids, par rapport au poids total des composants i à iv, d'au moins un stabilisateur, un agent de nucléation, un lubrifiant et agent de démoulage, un tensioactif, une cire, un antistatique, un agent antibuée, un colorant, un pigment, un absorbeur UV, un stabilisateur UV ou d'autres additifs ) pour plastiques ; et
B) 30 à 55 % en poids d'acide polylactique et
C) 0 à 2 % en poids d'un promoteur de compatibilité, un rapport de gonflement inférieur ou égal à 4:1 étant choisi et
au moins la couche intermédiaire ayant la composition suivante :
A) 20 à 70 % en poids d'un polyester aliphatique-aromatique biodégradable pouvant être obtenu par condensation de :
i) 40 à 70 % en moles, par rapport aux composants i à ii, d'un ou de plusieurs dérivés d'acides dicarboxyliques ou d'acides dicarboxyliques choisis dans le groupe constitué par : l'acide succinique, l'acide adipique, l'acide sébacique, l'acide azélaïque et l'acide brassylique ;
ii) 60 à 30 % en moles, par rapport aux composants i à ii, d'un dérivé de l'acide téréphtalique ;
iii) 98 à 102 % en moles, par rapport aux composants i à ii, d'un alkylènediol en C₂-C₈ ou d'un oxyalkylènediol en C₂-C₆ ;
iv) 0,00 à 2 % en poids, par rapport au poids total des composants i à iii, d'un allongeur de chaîne et/ou d'un agent de réticulation choisi dans le groupe constitué par : un isocyanate, un isocyanurate, une oxazoline, un époxyde, un anhydride d'acide carboxylique di- ou polyfonctionnel et/ou un alcool au moins trifonctionnel ou un acide carboxylique au moins trifonctionnel ;
v) 0,00 à 50 % en poids, par rapport au poids total des composants i à iv, d'une charge organique choisie dans le groupe constitué par : l'amidon naturel ou plastifié, les fibres naturelles, la farine de bois et/ou une charge inorganique choisie dans le groupe constitué par : la craie, le carbonate de calcium précipité, le graphite, le gypse, le noir de carbone conducteur, l'oxyde de fer, le chlorure de calcium, la dolomite, le kaolin, le dioxyde de silicium (quartz), le carbonate de sodium, le dioxyde de titane, le silicate, la wollastonite, le mica, la montmorillonite, le talc, les fibres de verre et les fibres minérales, et
vi) 0,00 à 2 % en poids, par rapport au poids total des composants i à iv, d'au moins un stabilisateur, un agent de nucléation, un lubrifiant et agent de démoulage, un tensioactif, une cire, un antistatique, un agent antibuée, un colorant, un pigment, un absorbeur UV, un stabilisateur UV ou d'autres additifs pour plastiques ;
et
B) 30 à 80 % en poids de l'acide polylactique;
et
C) 0 à 2 % en poids d'un promoteur de compatibilité.

2. Procédé selon la revendication 1, dans lequel les composants i) et ii) du polyester A sont définis de la manière suivante :
i) 52 à 65 % en moles, par rapport aux composants i à ii, d'un ou de plusieurs dérivés d'acides dicarboxyliques ou d'acides dicarboxyliques choisis dans le groupe constitué par : l'acide succinique, l'acide adipique, l'acide sébacique, l'acide azélaïque et l'acide brassylique ;
ii) 48 à 35 % en moles, par rapport aux composants i à ii, d'un dérivé de l'acide téréphtalique.

3. Procédé selon la revendication 1 ou 2, dans lequel l'acide sébacique ou des mélanges d'acide sébacique avec les autres diacides sont utilisés dans le composant i) du polyester A.

4. Procédé selon les revendications 1 à 3, dans lequel le mélange de polymères contient en tant que promoteur de compatibilité C 0,05 à 2 % en poids d'un poly(méth)acrylate contenant un époxyde.

5. Procédé selon les revendications 1 à 4, pour la fabrication d'un film rétractable fin d'une épaisseur de 20 à 40 µm.

6. Procédé selon les revendications 1 à 4, pour la fabrication d'un film rétractable épais d'une épaisseur de 50 à 180 µm.

7. Procédé selon la revendication 5, pour la fabrication de films rétractables pour livres, bouteilles, boîtes de conserve et produits alimentaires.

8. Procédé selon la revendication 6, pour la fabrication de films rétractables pour palettes et conteneurs.
